# EUROPEAN PATENT SPECIFICATION

(11) **EP 2 144 479 B1**
(45) Date of publication and mention of the grant of the patent: **27.01.2016**
(21) Application number: 08864587.4
(22) Date of filing: 28.11.2008
(51) Int. Cl.: H04W 4/12

(54) **METHOD, SYSTEM AND MESSAGE SERVICE INTERWORKING MODULE FOR IMPLEMENTING MESSAGE SERVICE INTERWORKING**
VERFAHREN, SYSTEM UND NACHRICHTENDIENST-INTERWORKINGMODUL ZUR IMPLEMENTIERUNG EINES NACHRICHTENDIENST-INTERWORKINGS
PROCÉDÉ, SYSTÈME ET MODULE D'INTERFONCTIONNEMENT DE SERVICE DE MESSAGE POUR METTRE EN UVRE UN INTERFONCTIONNEMENT DE SERVICE DE MESSAGE

(30) Priority: 25.12.2007 CN 200710032868; 07.01.2008 CN 200810002514; 12.06.2008 CN 200810110203
(43) Date of publication of application: 13.01.2010
(73) Proprietor: Huawei Technologies Co., Ltd., Longgang District Shenzhen, Guangdong 518129 (CN)
(72) Inventor: GU, Jiongjiong, Guangdong 518129 (CN); CHENG, Hua, Guangdong 518129 (CN); XU, Peili, Guangdong 518129 (CN); ZHANG, Ying, Guangdong 518129 (CN)
(74) Representative: Kreuz, Georg Maria
(86) International application number: PCT/CN2008/073255
(87) International publication number: WO 2009/079954

(56) References cited:
- CN-A- 101 030 948
- CN-A- 101 083 620
- KR-A- 20050 001 222
- "3rd Generation Partnership Project; Technical Specification Group Services and System Aspects; Service Level Interworking for Messaging Services; Stage 2 (Release 8)" 3GPP STANDARD; 3GPP TR 23.811, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.0.0, 1 December 2007 (2007-12-01), pages 1-32, XP050363810
- "3rd Generation Partnership Project; Technical Specification Group Services and System Aspects; Support of Short Message Service (SMS) over generic 3GPP Internet Protocol (IP) access; Stage 2 (Release 8)" 3GPP STANDARD; 3GPP TS 23.204, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 December 2007 (2007-12-01), pages 1-30, XP050363055
- "3rd Generation Partnership Project; Technical Specification Group Services and System Aspects; Service level interworking for messaging services; Stage 2 (Release 8)" 3GPP STANDARD; 3GPP TR 23.811, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 March 2008 (2008-03-01), pages 1-36, XP050363816

## Description

### FIELD OF THE TECHNOLOGY

The present invention relates to the field of communications, and more particularly to a method, a system, and a message service interworking module for implementing message service interworking.

### BACKGROUND OF THE INVENTION

The short message service (SMS) is defined by the 3rd Generation Partnership Project (3GPP) for meeting the demands of receiving and sending short messages in a circuit switched domain (CS domain)/packet switched domain (PS domain). The SMS mainly delivers a message content in a text format. The service has developed to a mature stage and is widely applied.

The instant message (IM) service is defined by the 3GPP, the Internet Engineering Task Force (IETF), and the Open Mobile Alliance (OMA) based on the Session Initiation Protocol (SIP). The IM is mainly applied in an Internet Protocol (IP) domain for meeting the demands of receiving and sending messages in the IP domain, and can deliver voice, image, video, text, and other multimedia message content. SIMPLE IM, a format of the IM defined by the OMA, includes session independent message modes (page mode and large message mode) and a session based message mode, and is an application form of the IM that is widely employed currently. The page mode is an SIP MESSAGE-based message transfer mode, while the large message mode and session based message mode are both message transfer modes based on other SIP protocols, for example, the Message Session Relay Protocol (MSRP). The 3GPP also defines a message format transferred in the SIP MESSAGE (see TS 23.228), which is mainly applied in an IP multimedia subsystem (IMS).

In order to implement interworking of various message services, the 3GPP has defined the Message Service Service-level Interworking (MESSIW) service, which implements interworking in the service layer, that is, the message format is converted by the network without extending the existing terminal capability of a user equipment (UE). For example, if an IMS user intends to send a message to a CS/PS domain user, but the IMS user only supports an IM message format, while the CS/PS domain user only supports an SMS message format, the network converts the IM format into the SMS format at the sender and sends it to the receiver.

The above conventional solution performs message service interworking at the sender to convert an IM message sent by the IMS user into an SMS message, so that the CS/PS domain user receives the SMS message through the CS/PS domain. However, a solution for performing message service interworking at a receiver, that is, converting a received IM message into an SMS message so that the IMS user (the receiver) receives the IM message through the CS/PS domain has not been realized currently.

"Service Level Interworking for Messaging Services; Stage 2 (Release 8)"; 3GPP TR 23.811, V1.0.0, XP050363810 describes the results of the study into the architectural requirements and comes up with the solution of the service level interworking for the Short Message service and Instant Message service.

"Support of Short Message Service (SMS) over generic 3GPP Internet Protocol (IP) access; Stage 2 (Release 8)"; 3GPP TS 23.204, V8.0.0, XP050363055 describes the new capabilities and enhancements needed to support SMS over a generic IP Connectivity Access Network using IMS capabilities.

### SUMMARY OF THE INVENTION

The present invention is directed to a method, a system, and a message service interworking module for implementing message service interworking, so that an IMS user can receive service information of an IM through a conventional CS domain or PS domain when serving as a receiver of the IM.

In order to solve the above technical problem, the present invention provides as a first aspect a method for implementing message service interworking, which includes the following steps.

A message service interworking module serving a receiver receives an IM sent by a sender.

The message service interworking module selects a CS domain or PS domain as a routing network.

The message service interworking module selects a routing entity in the conventional CS domain or PS domain.

The message service interworking module converts the IM into a short message and sends the short message to the receiver through the selected routing entity;
wherein when one of a Mobile Switching Center MSC and a Serving GPRS Support Node SGSN serving the receiver is used as the routing entity, the sending the short message to the receiver through the selected routing entity in one of the CS domain and the PS domain comprises:
sending, by the message service interworking module, a short message service SMS deliver message to one of the MSC and the SGSN serving the receiver, wherein in the SMS deliver message, sender information is information of the sender of the IM, receiver information is information of the receiver of the IM, and receiver SMS service center SMS-SC information is an address of the message service interworking module.

The present invention provides as a second aspect a system for implementing message service interworking, which includes a message service interworking module and a routing entity.

The message service interworking module serving a receiver is configured to receive an IM sent by a sender, select a CS domain or PS domain as a routing network, select the routing entity in the CS domain or PS domain, convert the received IM into a short message, and send the short message to the selected routing entity.

The routing entity in the CS domain or PS domain is configured to receive and send the short message to the receiver.

The present invention provides as a third aspect a message service interworking module, which includes a transceiver module, a routing network selection module, a routing entity selection module, and a message conversion module.

The transceiver module is configured to receive an IM sent by a sender, and send a short message obtained after conversion to a selected routing entity;
wherein when one of a Mobile Switching Center MSC and a Serving GPRS Support Node SGSN serving the receiver is used as the routing entity, the transceiver module configured to send the short message to the selected routing entity comprises:
the transceiver module, configured to send a short message service SMS deliver message to one of the MSC and the SGSN serving the receiver, wherein in the SMS deliver message, sender information is information of the sender of the IM, receiver information is information of the receiver of the IM, and receiver SMS service center SMS-SC information is an address of the message service interworking module.

The routing network selection module is configured to select a CS domain or PS domain as a routing network.

The routing entity selection module is configured to select the routing entity in the CS domain or PS domain.

The message conversion module is configured to convert the received IM into the short message.

The present invention has the following beneficial effects. A message service interworking module serving a receiver selects a routing entity in a conventional CS domain or PS domain, performs message service interworking at the receiver to convert an IM message into an SMS message and send the SMS message obtained after conversion to the receiver through the selected routing entity, so that an IMS user can receive service information of the IM through the conventional CS domain or PS domain when serving as the receiver.

### BRIEF DESCRIPTION OF THE DRAWINGS

FIG. 1 is a schematic flow chart of a method for implementing message service interworking according to an embodiment of the present invention;
FIG. 2 is a schematic flow chart illustrating subsequent processing of a message delivery failure in the embodiment shown in FIG. 1;
FIG. 3 is schematic flow chart of a process for selecting an SMS service center (SMS-SC) serving a receiver or an SMS-SC serving a message service interworking module as a routing entity to send an IM to the receiver in embodiment 1 of the present invention;
FIG. 4 is a schematic flow chart of a process for selecting a Mobile Switching Center (MSC) or Serving GPRS Support Node (SGSN) serving a receiver as a routing entity to send an IM to the receiver in embodiment 2 of the present invention;
FIG. 5 is a schematic flow chart illustrating a processing procedure of a message delivery failure in embodiment 3 of the present invention;
FIG. 6 is another schematic flow chart illustrating a processing procedure of a message delivery failure in embodiment 4 of the present invention;
FIGS. 7A & 7B are still another schematic flow chart illustrating a processing procedure of a message delivery failure in embodiment 5 of the present invention;
FIG. 8 is a schematic structural view of a system for implementing message service interworking according to embodiment 6 of the present invention; and
FIG. 9 is a schematic structural view of a message service interworking module according to embodiment 7 of the present invention.

### DETAILED DESCRIPTION OF THE EMBODIMENTS

Embodiments of the present invention are described in detail below with reference to accompanying drawings.

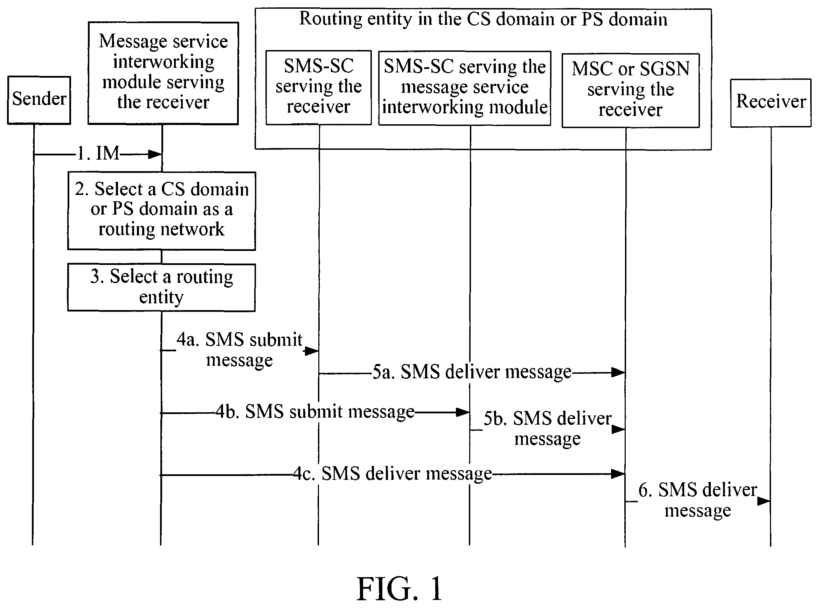

Referring to FIG. 1, a method for implementing message service interworking according to an embodiment of the present invention is as follows.

In step 1, a sender sends an IM message. For example, the sender is an IMS user and sends the IM message through an IMS network; the IM message may be an SIP message or an MSRP message, and may carry sender information, receiver information, and a message content. The IM message is routed to a message service interworking module serving a receiver. The receiver is a user subscribing to an IMS service who may also be a user of a CS/PS network. The message service interworking module may be an IP short message gateway (IP-SM-GW) in the IMS network.

In step 2, the message service interworking module performs domain selection on the received IM message according to an operator's policy, a user parameter, a registration status of a user, and other information. Selecting an IMS domain in the domain selection is the prior art, and will not be described herein again. In this embodiment, a conventional CS domain is selected as a routing network.

In step 3, the message service interworking module selects a routing entity, converts the IM message into a short message (SMS message), and then sends the short message carrying the message content to the routing entity. The conversion of the IM message into the short message is mainly a conversion of corresponding fields of the message. For example, the sender information and the receiver information in message fields are both converted into information of the receiver of the IM message; for another example, the sender information in the message field is converted into an address of the message service interworking module, and the receiver information in the message field is converted into information of the receiver of the IM message.

The routing entity may be one of the following entities:
(1) An SMS-SC serving the receiver;
(2) An SMS-SC serving the message service interworking module;
(3) An MSC or SGSN serving the receiver.

The manners of identity authentication of the SMS-SCs in (1) and (2) are different: only whether it is the receiver needs to be determined in the identity authentication of the SMS-SC in (1), while only whether it is the address of the message service interworking module needs to be determined in the identity authentication of the SMS-SC in (2). As for the physical structure, the SMS-SCs in (1) and (2) may be disposed in the same entity or may be the same entity. However, as for the logical function, the SMS-SCs in (1) and (2) may respectively work according to their respective logical functions through the above identity authentication manners, that is, respectively serve as routing entities in different routing manners of a CS/PS domain in this embodiment.

The method in which the message service interworking module selects the relevant entity may be one of the following methods.
(1) The SMS-SC serving the receiver is selected according to subscription information or registration information of the receiver. For example, the subscription information or registration information of the receiver includes number information or address information of the SMS-SC serving the receiver.
(2) The SMS-SC serving the message service interworking module is selected according to SMS-SC information configured in configuration data of the message service interworking module, network configuration data, or operator configuration data.
(3) The MSC or SGSN serving the receiver is selected according to information of the MSC or SGSN serving the receiver recorded in a home subscriber server (HSS) or home location register (HLR). In this embodiment, the message service interworking module sends a routing information request message, and acquires the recorded information from an answer message carrying address information of the MSC or SGSN serving the receiver currently returned by the HSS/HLR.

Subsequent steps are different according to the selected routing entity.
(I) The routing entity selected by the message service interworking module is the SMS-SC serving the receiver.
   In step 4a, the message service interworking module sends an SMS-SUBMIT message to the SMS-SC serving the receiver. In the SMS-SUBMIT message, sender information and receiver information are both information of the receiver of the IM message, and receiver SMS-SC information is an address of the SMS-SC serving the receiver. The address of the SC is added to the SMS-SUBMIT message when the IM message is converted into the SMS format by the message service interworking module. Specifically, the address may be obtained by carrying the address in the registration information of the receiver or assigning the address when the receiver subscribes to data and then storing the address in the message service interworking module. Of course, the sender information of the IM message may also be contained in the content of the SMS-SUBMIT message.
   In step 5a, the SMS-SC serving the receiver sends an SMS-DELIVER message to an MSC or SGSN serving the receiver.
(II) The routing entity selected by the message service interworking module is the SMS-SC serving the message service interworking module.
   In step 4b, the message service interworking module sends an SMS-SUBMIT message to the SMS-SC serving the message service interworking module. In the SMS-SUBMIT message, sender information is a number of the message service interworking module, receiver information is information of the receiver of the IM message, and receiver SMS-SC information is an address of the SMS-SC serving the message service interworking module. Of course, the sender information of the IM message may also be contained in the content of the SMS-SUBMIT message.
   In step 5b, the SMS-SC serving the message service interworking module sends an SMS-DELIVER message to an MSC or SGSN serving the receiver.
(III) The routing entity selected by the message service interworking module is the MSC or SGSN serving the receiver.

In step 4c, the message service interworking module sends an SMS-DELIVER message to the MSC or SGSN serving the receiver. In the SMS-DELIVER message, sender information is the sender information of the IM message or a number selected according to the operator's policy, receiver information is the receiver information of the IM message, and receiver SMS-SC information is an address of the message service interworking module, an address of an SMS-SC serving the receiver, or an address of an SMS-SC serving the IP-SM-GW. Specifically, the address may be obtained by carrying the address in the registration information of the receiver or assigning the address when the receiver subscribes to data and then storing the address in the message service interworking module.

The message service interworking module may write the address of the SMS-SC in the short message according to the policy or configuration information. Whether the address information of the SMS-SC is the address information of the message service interworking module, the address information of the SMS-SC serving the calling party, the address information of the SMS-SC serving the called party, or address information of a special SMS-SC is not limited in the present invention.

The advantages of employing the routing manner described in step 4c lie in that, first, the routing path and link is short and the procedure is simple; next, the sender information of the IM message may be carried in a field of the message, but the sender information of the IM message is carried in the message content in the routing manners described in steps 4a and 4b. Therefore, the capacity of the message content is saved so that the message content can carry more other useful information when the routing manner described in step 4c is employed.

In step 6, the MSC or SGSN serving the receiver sends the SMS-DELIVER message sent by the SMS-SC serving the receiver, the SMS-SC serving the message service interworking module, or the message service interworking module to the receiver.

The SMS-SC serving the receiver may be in the same entity as the message service interworking module serving the receiver, and in this case, step 4a may be omitted. Similarly, the SMS-SC serving the message service interworking module may be in the same entity as the message service interworking module serving the receiver, and in this case, step 4b may be omitted.

Through the above process, the receiver can receive the SMS-DELIVER message. Afterwards, a delivery status of the message will be returned to the message service interworking module serving the receiver. The delivery status mainly includes: delivery success and delivery failure. The returned delivery success message and delivery failure message are respectively described when the routing manner in step 4c is employed.
(I) The message service interworking module serving the receiver selects a processing method which is one or any combination of the following methods upon receiving the delivery success message sent by the receiver.
   (1) The message service interworking module serving the receiver discards the delivery success message without any processing.
   (2) The message service interworking module serving the receiver sends a success response of the IM message to the sender. For example, the message service interworking module may send a 200 OK response to the sender.
   (3) The message service interworking module serving the receiver sends a delivery success message not associated with the IM message to the sender.
   (4) The message service interworking module serving the receiver sends a delivery success message associated with the IM message to the sender. For example, the message service interworking module may send to the sender an instant message disposition notification (IMDN) message delivery notification carrying delivery success information, and a message identifier of the delivery notification is the same as that in the IM message.

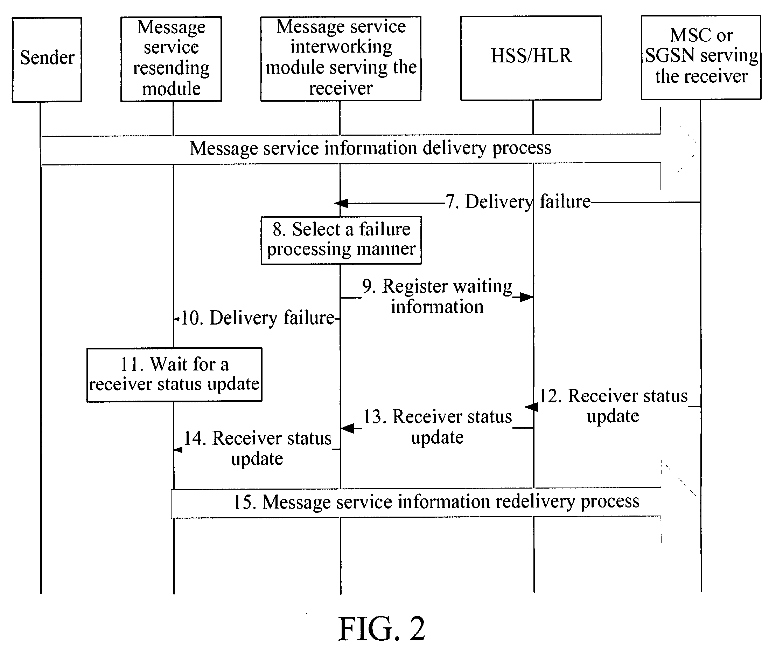

   The message service interworking module serving the receiver selects the above processing method of delivery success in one or any combination of the following manners.
   (1) The processing method is selected according to the operator's policy.
   (2) The processing method is selected according to a format of the received IM message.
   (3) The processing method is selected according to preferred information of the receiver.
   (4) The processing method is selected according to whether the IM message carries message status request information. For example, the sender or a message service resending module may carry the message status request information in the IM message in a message header field or message body. Moreover, the message status request information may be carried in an IMDN message body. Specifically, an IMDN requirement of "positive-delivery" may be carried in the IMDN message body.
(II) Referring to FIG. 2, a processing method of the message service interworking module serving the receiver upon receiving the delivery failure message is as follows.

In step 7 (a continuation to steps 1-6 of message interworking), the MSC or SGSN serving the receiver sends the delivery failure message to the message service interworking module serving the receiver. The delivery failure message may be generated by the MSC or SGSN serving the receiver, or generated by the receiver and delivered to the MSC or SGSN serving the receiver, and then delivered to the message service interworking module serving the receiver by the MSC or SGSN serving the receiver.

The reason for delivery failure may be one of the following.
(1) The receiver is not online.
(2) A receiver memory is full.
(3) A UE of the receiver has an error.

In step 8, the message service interworking module serving the receiver selects a failure processing method.

The failure processing method includes one of the following.
(1) The message service interworking module discards the delivery failure message without any processing.
(2) The message service interworking module sends a failure response of the IM message to the sender and may carry an address of the message service interworking module in a relevant header field. For example, the message service interworking module may send a 404 Not Found failure response to the sender and carry the address of the message service interworking module in a contact header field.
(3) The message service interworking module sends a delivery failure message associated with the IM message to the sender. For example, the message service interworking module may send to the sender an IMDN message delivery notification carrying delivery failure information, and a message identifier of the delivery notification is the same as that in the IM message.
(4) The message service interworking module waits until a status of the receiver is recovered, and redelivers message service information.

The failure processing method is selected in one or any combination of the following manners.
(1) The failure processing method is selected according to the operator's policy.
(2) The failure processing method is selected according to preferred information of the receiver.
(3) The failure processing method is selected according to a registration status of the receiver.
(4) The failure processing method is selected according to a format of the received IM message.
(5) The failure processing method is selected according to whether the IM message carries message status request information. For example, the sender or a message service resending module may carry the message status request information in the IM message in a message header field or message body. Specifically, an IMDN requirement of "positive-delivery" or "negative-delivery" may be carried in an imdn.Disposition-Notification header field in a message body in a Common Profile for Instant Message (CPIM) format of the IM.
(6) The failure processing method is selected according to whether the message service resending module subscribes to status information of the receiver. For example, the message service resending module may send to the message service interworking module serving the receiver a Subscribe message carrying subscription information, or the subscription information may be carried in the IM message. The subscription information is the status information of the receiver.

When the above selection method involves the message service resending module, in the process of step 1, a serving call session control function (S-CSCF) may trigger the IM message to the message service resending module through initial filter criteria (IFC) triggering, and then the message service resending module may deliver the IM message to the message service interworking module serving the receiver after carrying message status request information in the IM message.

In step 9, when the message service interworking module serving the receiver selects the manner of waiting until the status of the receiver is recovered and redelivering the message service information, the message service interworking module serving the receiver registers waiting information with the HSS/HLR, including waiting for receiver status change information and address information to be notified upon receiver status change. The receiver status change information includes one of the following information: receiver registration status and receiver memory recovery status, and the address information to be notified upon receiver status change is address information of the message service interworking module serving the receiver.

In step 10, the message service interworking module serving the receiver sends the delivery failure message to the message service resending module. The delivery failure message may be generated according to IMDN rules and carry the delivery failure reason through an IMDN Delivery Notification message body.

In step 11, the message service resending module waits for a receiver status update message.

In steps 12-14, when the receiver status is changed, for example, the receiver initiates registration again or the receiver memory is recovered, the MSC or SGSN serving the receiver sends the receiver status update message to the HSS/HLR, the HSS/HLR sends the receiver status update message to the message service interworking module serving the receiver, and the message service interworking module serving the receiver sends the receiver status update message to the message service resending module. The receiver status update message may be a Notify message.

In step 15, the message service resending module resends the IM message to the receiver.

The message service resending module may be disposed in an application server (AS) serving the sender, in an AS serving the receiver, or in the same entity as the message service interworking module serving the receiver.

When the message service resending module is in the same entity as the message service interworking module serving the receiver, steps 10 and 14 may be omitted.

Moreover, step 10 may be performed before or at the same time as step 9.

When the routing entity selected by the message service interworking module in step 3 is the SMS-SC serving the receiver, or the SMS-SC serving the message service interworking module, or the MSC serving the receiver, or the SGSN serving the receiver, the above processing for the returned delivery success message and delivery failure message is applicable, and the difference merely lies in that, the delivery success message or delivery failure message is sent by the responding routing entity selected by the message service interworking module in step 3 to the message service interworking module.

The above processing for the returned delivery success message and delivery failure message is summarized as follows.

The message service interworking module serving the receiver selects a processing method which is one or any combination of the following methods upon receiving a delivery report message sent by the receiver.
(1) The message service interworking module serving the receiver discards the delivery report message without any processing.
(2) The message service interworking module serving the receiver sends a delivery report message of the IM message to the sender. When the delivery report message is a delivery success message, the message service interworking module sends a success response, for example, 200 OK to the sender; when the delivery report message is a delivery failure message, the message service interworking module may send a failure response to the sender and may carry an address of the message service interworking module in a relevant header field. For example, the message service interworking module may send a 404 Not Found failure response to the sender and carry the address of the message service interworking module in a contact header field.
(3) The message service interworking module serving the receiver sends a delivery report message not associated with the IM message to the sender.
(4) The message service interworking module serving the receiver sends a delivery report message associated with the IM message to the sender.

The message service interworking module serving the receiver selects the above processing method of the delivery report in one or any combination of the following manners.
(1) The processing method is selected according to the operator's policy.
(2) The processing method is selected according to a format of the received IM message.
(3) The processing method is selected according to preferred information of the receiver.
(4) The processing method is selected according to whether the IM message carries message status request information. For example, the sender or a message service resending module may carry the message status request information in the IM message in a message header field or message body. Moreover, the message status request information may be carried with an IMDN message body. Specifically, an IMDN requirement of "positive-delivery", "positive-delivery", or an IMDN requirement of "negative-delivery" may be carried in the IMDN message body.
(5) The processing method is selected according to a registration status of the receiver.
(6) The processing method is selected according to whether the message service resending module receives subscribed receiver status information. For example, the message service interworking module serving the receiver receives a Subscribe message carrying subscription information, or subscription information is carried in the IM message. The subscription information is the status information of the receiver.

When the delivery report message is a delivery failure message, the delivery report may also be processed by using the method described in FIG. 2 in (II).

Embodiments of the present invention are illustrated below with specific application instances.

### Embodiment 1 of the Present Invention

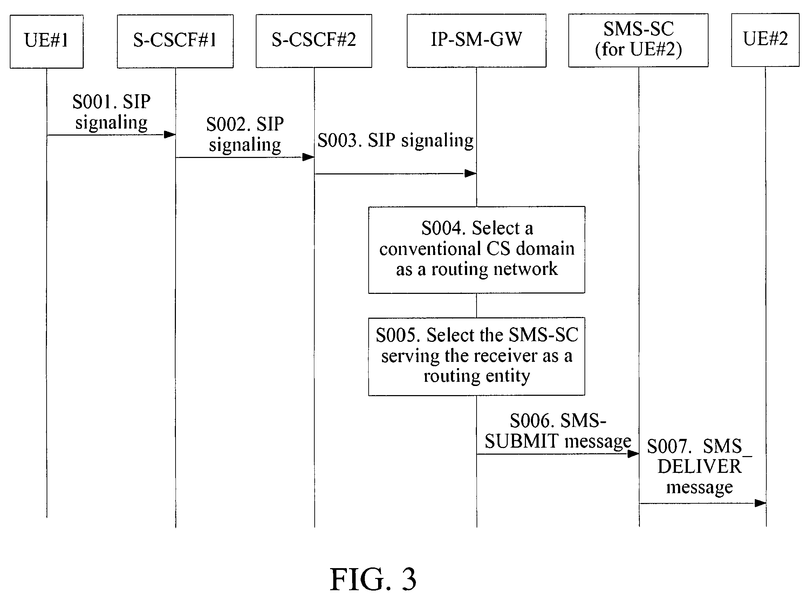

Referring to FIG. 3, in this embodiment, an IP-SM-GW converts a received SIP message into a short message (SMS_SUBMIT) and sends the short message to an SMS-SC serving a receiver, and afterwards, the SMS-SC serving the receiver sends the short message (SMS message) to the receiver according to TS 23.040. The message service interworking module is disposed in the IP-SM-GW.

In steps S001-S002, a UE#1 sends an SIP message to an S-CSCF#2 serving the receiver. For the sake of conciseness, entities such as a proxy call session control function (P-CSCF) and an interrogating call session control function (I-CSCF) are omitted.

In step S003, the S-CSCF#2 forwards the SIP message to the IP-SM-GW serving the receiver according to IFC of the receiver.

In step S004, the IP-SM-GW selects a conventional CS domain as a routing network.

In step S005, the IP-SM-GW, for example, selects the SMS-SC serving the receiver as a routing entity according to a requirement of an operator's policy as described in the method of step 3, and selects the SMS-SC serving the receiver specified in receiver subscription data as the routing entity according to the subscription data of the receiver.

In step S006, the IP-SM-GW sends an SMS-SUBMIT message to the SMS-SC. In the SMS-SUBMIT, a sender address and a receiver address are both an address of the receiver of the SIP Message in step S001, and an SC address is an address of the SC specified in the receiver subscription data. An address of the sender of the SIP Message in step S001 may also be carried in a message content of the SMS-SUBMIT, and then the SMS-SUBMIT is sent to the SMS-SC serving the receiver.

In step S007, the SMS-SC delivers message service information to a UE#2 through an SMS_DELIVER message.

In step S005, the IP-SM-GW may select an SMS-SC serving the IP-SM-GW according to the method described in step 3, and the IP-SM-GW may acquire relevant information of the SC of the IP-SM-GW through local configuration. At this time, in the SMS-SUBMIT message, a sender address is an address of the IP-SM-GW, a receiver identifier is the address of the receiver of the SIP Message in step S001, and an SC address is an address of the SC locally configured by the IP-SM-GW.

When the SMS-SC serving the receiver or the SMS-SC serving the IP-SM-GW is disposed in the IP-SM-GW, step S006 may be omitted.

### Embodiment 2 of the Present Invention

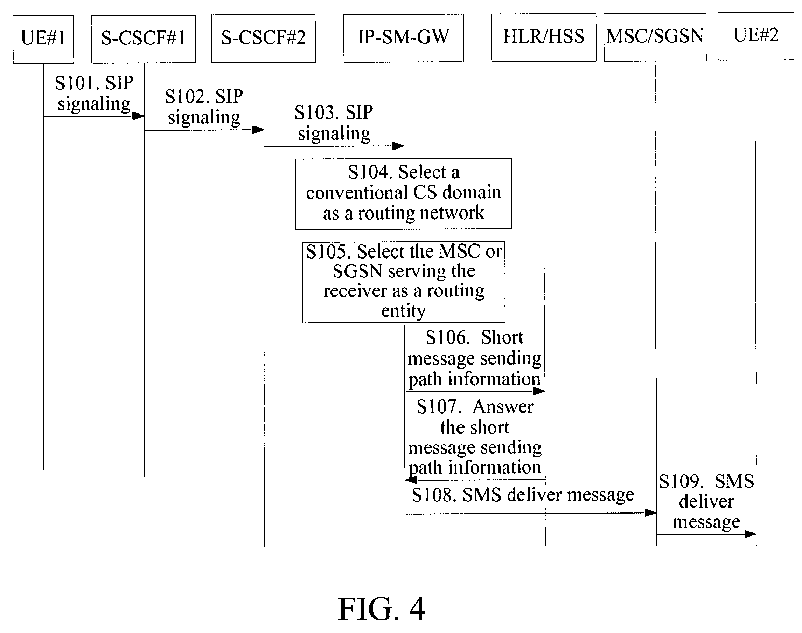

Referring to FIG. 4, in this embodiment, an IP-SM-GW converts a received SIP message into a short message (SMS_DELIVER) and directly sends the short message to an MSC/SGSN that is providing service to a receiver currently, and afterwards, the MSC/SGSN sends the short message (SMS_DELIVER) to the receiver. The message service interworking module is in the IP-SM-GW.

Steps S101-S104 are the same as steps S001-S004 in embodiment 1.

In step S105, the IP-SM-GW, for example, selects the MSC or SGSN serving the receiver as a routing entity according to a requirement of an operator's policy as described in the method of step 3.

In step S106, the IP-SM-GW sends a short message sending path information message MAP_SEND_ROUTING_INFO_FOR_SM to an HLR/HSS. A Mobile Station Integrated Services Digital Number (MSISDN) and a Service Centre Address of the MAP_SEND_ROUTING_INFO_FOR_SM are respectively set to the address of the receiver of the SIP Message in step S101 in embodiment 1 and the number of the IP-SM-GW.

In step S107, the HLR/HSS answers the received MAP_SEND_ROUTING_INFO_FOR_SM request. Network node number and additional number fields of the answer carry address information of the MSC or SGSN serving the receiver currently.

Steps S106 and S107 are the specific procedures in which the message service interworking module serving the receiver acquires information of the MSC or SGSN serving the receiver that is recorded in the HSS/HLR.

In step S108, the IP-SM-GW sends an SMS-DELIVER to the MSC or SGSN serving the receiver. In the SMS-DELIVER, a sender address is the address of the sender of the SIP Message in step S101, a receiver identifier is the address of the receiver of the SIP Message in step S101, and an SC address is the address of the IP-SM-GW. Afterwards, the SMS-DELIVER is sent to the MSC/SGSN serving the receiver.

In step S109, the MSC/SGSN forwards the SMS-DELIVER to a UE#2.

Steps S106 and S107 may be performed before step S104, and the IP-SM-GW may determine a registration status of the user in the CS/PS domain according to address information returned by the HSS/HLR, and then perform domain selection according to the registration status. For example, when the address returned by the HSS/HLR is null, the IP-SM-GW may determine that the user is not registered with the CS/PS domain, and then select an IMS domain in the domain selection; when the HLR/HSS returns the address of the MSC/SGSN, the CS or PS domain may be selected.

The Service Centre Address in step S106 and the SC address in step S108 may also be set to the address of an SMS-SC serving the receiver or the address of an SMS-SC serving the IP-SM-GW.

Embodiments 1 and 2 give examples of delivering IM message service information to the IP-SM-GW through an SIP Message. The IM message service information may also be delivered to the IP-SM-GW through an MSRP. At this time, the UE#1 sends an INVITE message, and the S-CSCF#1 and S-CSCF#2 route the INVITE message to the IP-SM-GW; after the IP-SM-GW responds to the INVITE message successfully, the UE#1 and the IP-SM-GW establish an MSRP connection according to a standard process of the MSRP, and the UE#1 sends the IM message service information to the IP-SM-GW through the MSRP connection. The subsequent processing is the same as the process for sending an SMS to the CS domain by the IP-SM-GW in embodiments 1 and 2, in which the selection of the conventional CS domain by the IP-SM-GW may be performed at any time after the INVITE message is received.

### Embodiment 3 of the Present Invention

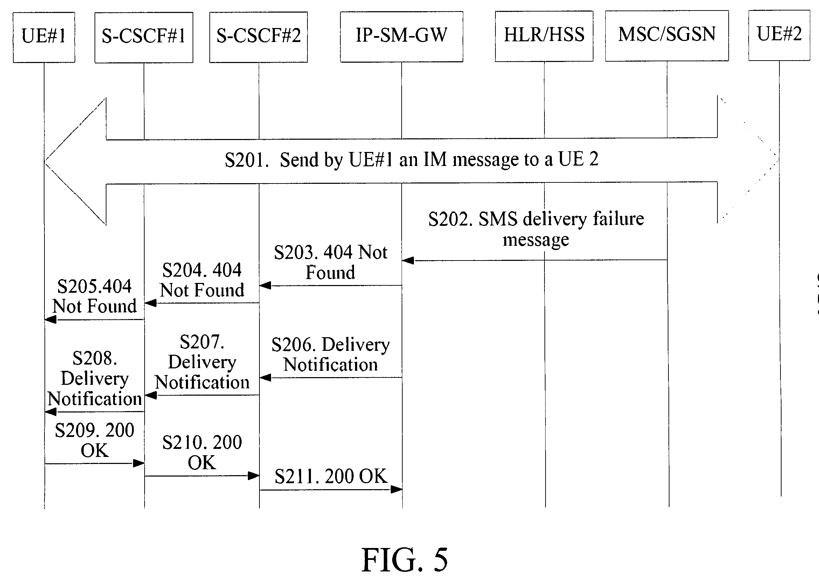

Referring to FIG. 5, in this embodiment, an IP-SM-GW sends a short message to a UE#2 according to the method described in embodiment 2, and upon receiving a delivery failure message, the IP-SM-GW first generates an IM message failure response to a sender and then generates a delivery notification of error according to an IMDN requirement of an IM message to the sender of the IM message. The message service interworking module is disposed in the IP-SM-GW.

In step S201, similar to the routing manner described in embodiment 2, an SIP message is sent to a UE#2. An IMDN requirement carried in the SIP Message includes a requirement for sending an IM delivery success/failure report, which may be set to, for example, imdn.Disposition-Notification: positive-delivery, negative-delivery. A message identifier is imdn.Message-ID:34jk324j.

In step S202, an MSC or SGSN sends an SMS delivery failure message report SMS-DELIVER-REPORT to the IP-SM-GW.

In steps S203-S205, the IP-SM-GW sends a 404 Not Found failure response matching the SIP message in step S201 to a UE#1.

In steps S206-S208, the IP-SM-GW sends a delivery notification to the UE#1 and carries the message identifier 34jk324j of the SIP message in step S201 as well as descriptive information of the delivery failure in a message body.

In steps S209-S211, the UE#1 answers the received delivery notification.

### Embodiment 4 of the Present Invention

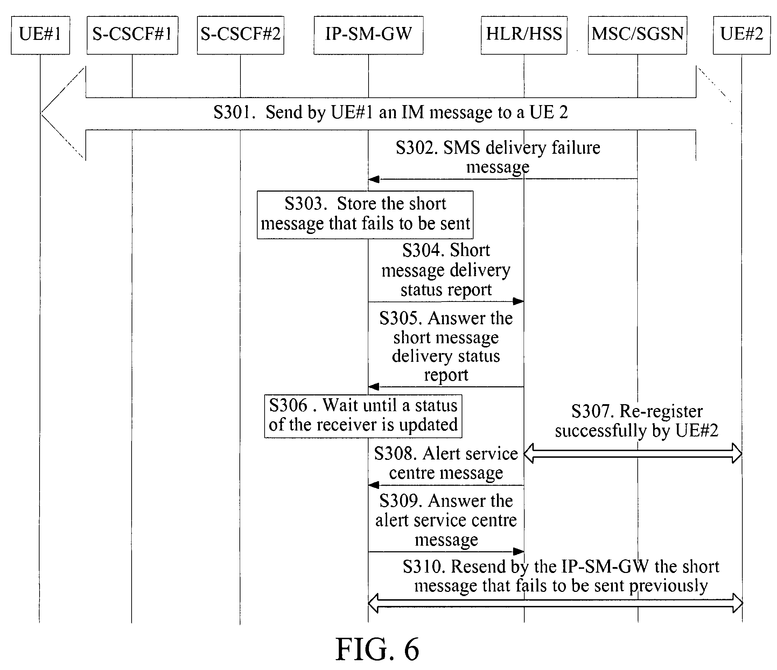

Referring to FIG. 6, in this embodiment, an IP-SM-GW sends a short message to a UE#2 according to the method described in embodiment 2, and upon receiving a delivery failure message, the IP-SM-GW stores the SMS that fails to be sent and waits until a status of the UE#2 is updated and sends the SMS to the UE#2 again. The message service resending module and the message service interworking module are both disposed in the IP-SM-GW.

Step S301 is the same as the message sending process described in embodiment 2.

In step S302, an MSC or SGSN sends an SMS delivery failure message report SMS-DELIVER-REPORT to the IP-SM-GW.

In step S303, since the IP-SM-GW receives the SMS-DELIVER-REPORT of failure, the IP-SM-GW stores the SMS-DELIVER.

In step S304, the IP-SM-GW sends a short message delivery status report message MAP-REPORT-SM-DELIVERY-STATUS to an HLR/HSS. The message indicates that a short message waits to be sent to a receiver at the IP-SM-GW. In the MAP-REPORT-SM-DELIVERY-STATUS, an MSISDN field is set to an address of the receiver, and a Service Centre Address field is set to an address of the IP-SM-GW.

In step S305, the HLR/HSS answers the received MAP-REPORT-SM-DELIVERY-STATUS request.

In step S306, the IP-SM-GW waits until a status of the receiver is updated.

In step S307, the UE#2 re-registers with the HSS/HLR successfully.

In step S308, the HLR/HSS sends an alert service centre message MAP-ALERT-SERVICE-CENTRE to the IP-SM-GW. The message indicates that the receiver may receive the short message. In the MAP-ALERT-SERVICE-CENTRE, an MSISDN-Alert field is set to the address of the receiver, and a Service Centre Address field is set to the address of the IP-SM-GW.

In step S309, the IP-SM-GW answers the received MAP-ALERT-SERVICE-CENTRE request.

In step S310, the IP-SM-GW resends the short message to the UE#2 according to the routing method described in embodiment 2.

### Embodiment 5 of the Present Invention

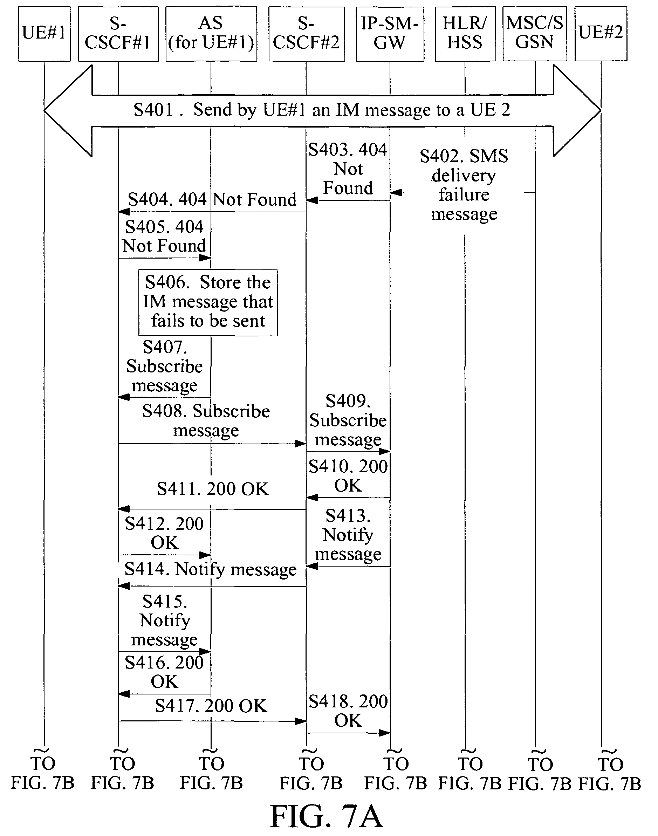

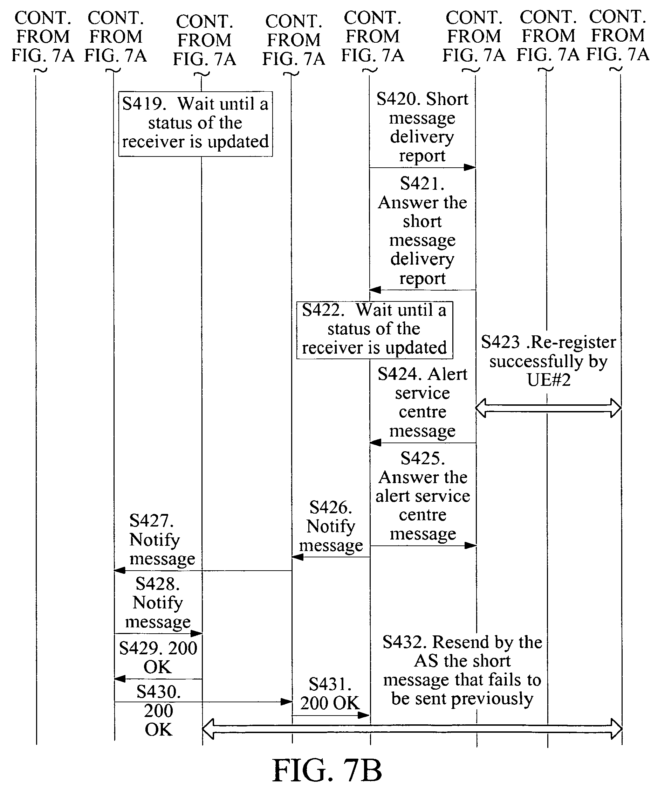

Referring to FIGS. 7A& 7B, in this embodiment, an IP-SM-GW sends a short message to a UE#2 according to the method described in embodiment 2; upon receiving a delivery failure message, the IP-SM-GW generates an IM message failure response to a sender, and after receiving the IM message failure response, an AS serving the sender stores an IM message that fails to be sent, subscribes to status information of the receiver from the IP-SM-GW, and waits until a status of the UE#2 is updated and sends the IM message to the UE#2 again. The message service interworking module is disposed in the IP-SM-GW, and the message service resending module is disposed in the AS serving the sender.

In step S401, similarly to the routing manner described in embodiment 2, an SIP message is sent to the UE#2, and an S-CSCF serving the sender triggers it to the AS serving the sender through IFC.

In step S402, an MSC or SGSN sends an SMS delivery failure message report SMS-DELIVER-REPORT to the IP-SM-GW.

In steps S403-S405, the IP-SM-GW sends a 404 Not Found failure response matching the SIP Message in step S201 to a UE#1. A contact header field in the failure response contains an address of the IP-SM-GW.

In step S406, the AS serving the sender stores the SIP Message that fails to be sent.

In steps S407-S412, the AS serving the sender sends a Subscribe message to the IP-SM-GW to request subscription of status information of the receiver. A request uniform resource identifier (URI) of the Subscribe request is the address of the IP-SM-GW, and an address of the receiver is carried in a message body.

In steps S413-S418, the IP-SM-GW sends a notify message Notify to the AS serving the sender which denotes that the subscription is successful.

In step S419, the AS serving the sender waits until a status of the receiver is updated.

In steps S420-S425, similar to steps S304-S309, the IP-SM-GW obtains information indicating that the receiver can re-receive the short message.

In steps S426-S431, the IP-SM-GW sends a Notify request to the AS serving the sender which denotes that the receiver can receive the message.

In step S432, the AS serving the sender resends the SIP Message to the UE#2 according to the routing method described in embodiment 2.

When the AS serving the sender carries subscription information in the IM message, steps S407-S418 may be omitted.

In embodiment 5, the processing manner when the message service resending module is disposed in the AS serving the sender is also applicable to the case that the message service resending module is disposed in an AS serving the receiver.

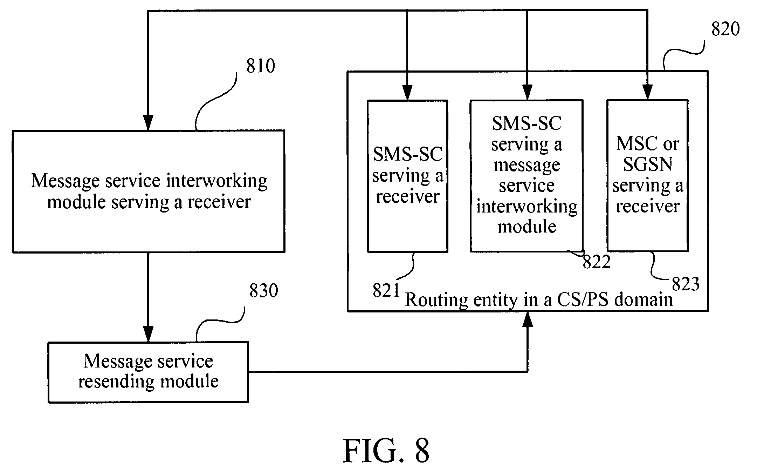

Referring to FIG. 8, a system for implementing message service interworking is provided in embodiment 6 of the present invention. The system includes a message service interworking module 810 and a routing entity 820.

The message service interworking module serving a receiver 810 is configured to receive an IM sent by a sender, select a CS domain or PS domain as a routing network, select a routing entity in the CS domain or PS domain, convert the received IM into a short message, and send the short message to the selected routing entity.

The routing entity 820 in the CS domain or PS domain is configured to receive and send the short message to the receiver.

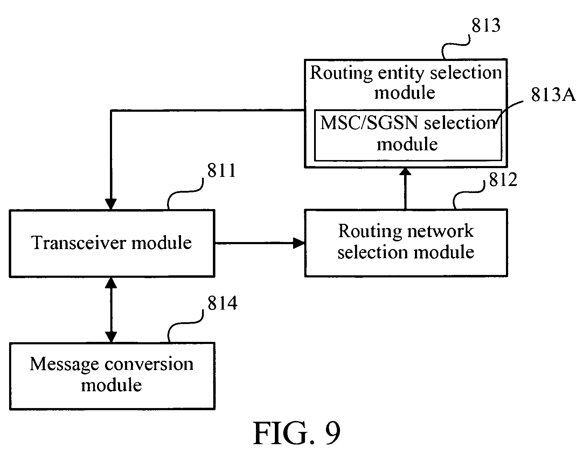

Referring to FIG. 9, the message service interworking module 810 according to embodiment 7 of the present invention further includes:
a transceiver module 811, configured to receive the IM sent by the sender and send the short message obtained after conversion to the selected routing entity;
a routing network selection module 812, configured to select the CS domain or PS domain as the routing network;
a routing entity selection module 813, configured to select the routing entity in the CS domain or PS domain; and
a message conversion module 814, configured to convert the received IM into the short message.

In this embodiment, after receiving the IM sent by the sender, the transceiver module 811 sends the IM to the message conversion module 814; the routing network selection module 812 performs domain selection on the received IM according to an operator's policy, a user parameter, a registration status of a user, and other information, and selects the CS domain or PS domain as the routing network; then, the routing entity selection module 813 selects the corresponding routing entity in the CS domain or PS domain, which includes an SMS-SC serving the receiver 821, an SMS-SC serving the message service interworking module 822, or an MSC or SGSN serving the receiver 823, and sends information of the selected routing entity to the transceiver module 811; the message conversion module 814 converts the received IM into the short message and sends the short message to the transceiver module 811; the transceiver module 811 sends the short message obtained after conversion to the selected routing entity.

Furthermore, the routing entity selection module 813 further includes an MSC/SGSN selection module 813A configured to interact with an HSS/HLR to acquire address information of an MSC or SGSN serving the receiver recorded in the HSS/HLR.

The routing entity 820 in the CS domain or PS domain includes the SMS-SC serving the receiver 821, the SMS-SC serving the message service interworking module 822, or the MSC or SGSN serving the receiver 823.

The message service interworking module 810 may be disposed in the same entity as the SMS-SC serving the receiver 821. The message service interworking module 810 may also be disposed in the same entity as the SMS-SC serving the message service interworking module 822.

This embodiment may further include a message service resending module 830 configured to resend the IM to the receiver after a status of the receiver is updated when the message service interworking module 810 receives a delivery failure message of the IM. The message service resending module 830 is disposed in an AS serving the receiver or the sender or in the same entity as the message service interworking module 810.

In the embodiments of the present invention, a message service interworking module serving a receiver selects a routing entity in a conventional CS domain or PS domain, performs message service interworking at the receiver to convert an IM message into an SMS message and send the SMS message to the receiver through the selected routing entity, so that an IMS user can receive service information of the IM through the conventional CS domain or PS domain when serving as the receiver.

## Claims

1. A method for implementing message service interworking, **characterized by**:
receiving, by a message service interworking module serving a receiver, an instant message IM sent by a sender (1);
selecting, by the message service interworking module serving the receiver, one of a circuit switched domain CS domain and a packet switched domain PS domain as a routing network (2); and
converting, by the message service interworking module serving the receiver, the IM into a short message, and sending the short message to the receiver through a routing entity in one of the CS domain and the PS domain (3);
wherein when one of a Mobile Switching Center MSC and a Serving GPRS Support Node SGSN serving the receiver is used as the routing entity, the sending the short message to the receiver through the routing entity in one of the CS domain and the PS domain comprises:
sending, by the message service interworking module, a short message service SMS deliver message to one of the MSC and the SGSN serving the receiver, wherein in the SMS deliver message, sender information is information of the sender of the IM, receiver information is information of the receiver of the IM, and receiver SMS service center SMS-SC information is an address of the message service interworking module (s108).

2. The method according to claim 1, further comprising:
interacting, by the message service interworking module serving the receiver, with one of a home subscriber server HSS and a home location register HLR to acquire registration status information of the receiver and selecting one of the CS domain and the PS domain as the routing network according to the registration status information of the receiver after receiving the IM sent by the sender.

3. The method according to claim 1, wherein the message service interworking module selects the routing entity in the one of CS domain and the PS domain through one of the following manners:
determining one of an MSC and an SGSN serving the receiver as the routing entity according to information of one of the MSC and the SGSN serving the receiver recorded in one of an HSS and an HLR.

4. The method according to any one of claims 1 to 3, wherein after the message service interworking module sends the short message to the receiver, the method further comprises:
receiving, by the message service interworking module, a delivery success message; and
processing, by the message service interworking module, the delivery success message.

5. The method according to claim 4, wherein the message service interworking module processes the delivery success message in one of the following manners:
discarding, by the message service interworking module, the delivery success message without any processing;
sending, by the message service interworking module, a success response of the IM to the sender;
sending, by the message service interworking module, a delivery success message not associated with the IM to the sender; and
sending, by the message service interworking module, a delivery success message associated with the IM to the sender.

6. The method according to claim 5, wherein the message service interworking module selects the manner of processing the delivery success message in at least one of the following manners:
selecting according to the operator's policy;
selecting according to a format of the received IM;
selecting according to preferred information of the receiver; and
selecting according to whether the IM carries message status request information.

7. The method according to any one of claims 1 to 3, wherein after the message service interworking module sends the short message to the receiver, the method further comprises:
receiving, by the message service interworking module, a delivery failure message; and
selecting, by the message service interworking module, a failure processing manner.

8. The method according to claim 7, wherein the message service interworking module selects the failure processing manner comprises one of the following:
discarding, by the message service interworking module, the delivery failure message without any processing;
sending, by the message service interworking module, a failure response of the IM to the sender;
sending, by the message service interworking module, a delivery failure message associated with the IM to the sender; and
waiting, by the message service interworking module, until a status of the receiver is recovered and redelivering message service information.

9. The method according to claim 8, wherein the failure processing manner is selected in at least one of the following manners:
selecting according to the operator's policy;
selecting according to preferred information of the receiver;
selecting according to a registration status of the receiver;
selecting according to a format of the received IM;
selecting according to whether the IM carries message status request information; and
selecting according to whether a message service resending module subscribes to status information of the receiver.

10. A message service interworking module, **characterized by**:
a transceiver module (811), configured to receive an instant message IM sent by a sender, send the IM to a message conversion module (814) and a routing network selection module (812), and send a short message converted by the message conversion module (814) to a selected routing entity;
the routing network selection module (812), configured to perform domain selection on the received IM and select one of a circuit switched domain CS domain and a packet switched domain PS domain as a routing network;
a routing entity selection module (813), configured to select the routing entity in one of the CS domain and the PS domain and send information of the selected routing entity to the transceiver module (811);
and
the message conversion module (814), configured to convert the received IM into the short message and send the short message to the transceiver module (811);
wherein when one of a Mobile Switching Center MSC and a Serving GPRS Support Node SGSN serving the receiver is used as the routing entity, the transceiver module (811) configured to send the short message converted by the message conversion module (814) to the selected routing entity comprises:
the transceiver module (811), configured to send a short message service SMS deliver message to one of the MSC and the SGSN serving the receiver, wherein in the SMS deliver message, sender information is information of the sender of the IM, receiver information is information of the receiver of the IM, and receiver SMS service center SMS-SC information is an address of the message service interworking module.

11. A system for implementing message service interworking, comprising: a message service interworking module (810) according to claim 10 and a routing entity (820) in one of a circuit switched domain CS domain and a packet switched domain PS domain configured to receive and send a short message to the receiver.

## Patentansprüche

1. Verfahren zur Implementierung eines "Nachrichtendienst-Interworkings", das durch Folgendes gekennzeichnet ist:
Empfangen einer durch einen Sender (1) gesendeten Sofortnachricht IM durch ein "Nachrichtendienst-Interworkingmodul", das einen Empfänger bedient;
Auswählen einer leitungsvermittelten Domäne CS-Domäne oder einer paketvermittelten Domäne PS-Domäne als Routingnetz (2) durch das "Nachrichtendienst-Interworkingmodul", das den Empfänger bedient; und
Umwandeln der IM in eine Kurznachricht durch das "Nachrichtendienst-Interworkingmodul", das den Empfänger bedient, und Senden der Kurznachricht an den Empfänger über eine Routinginstanz in der CS-Domäne oder der PS-Domäne (3);
wobei, wenn ein "Mobile Switching Center" MSC oder ein "Serving GPRS Support Node" SGSN, das bzw. der den Empfänger bedient, als Routinginstanz verwendet wird, das Senden der Kurznachricht an den Empfänger über die Routinginstanz in der CS-Domäne oder der PS-Domäne Folgendes umfasst:
Senden einer "Kurznachrichtendienst(SMS)-Deliver-Nachricht" an das MSC oder den SGSN, das bzw. der den Empfänger bedient, durch das "Nachrichtendienst-Interworkingmodul", wobei in der "SMS-Deliver-Nachricht" Senderinformationen Informationen des Senders der IM sind, Empfängerinformationen Informationen des Empfängers der IM sind und Empfänger-SMS-Dienstzentrum(SMS-SC)-Informationen eine Adresse des "Nachrichtendienst-Interworkingmoduls" sind (s108).

2. Verfahren gemäß Anspruch 1, das weiter Folgendes umfasst:
Interagieren mit einem "Home Subscriber Server" HSS oder einem "Home Location Register" HLR durch das "Nachrichtendienst-Interworkingmodul", das den Empfänger bedient, um Registrierungsstatusinformationen des Empfängers zu erfassen, und Auswählen der CS-Domäne oder der PS-Domäne als Routingnetz gemäß den Registrierungsstatusinformationen des Empfängers nach dem Empfangen der durch den Sender gesendeten IM.

3. Verfahren gemäß Anspruch 1, wobei das "Nachrichtendienst-Interworkingmodul" die Routinginstanz in der CS-Domäne oder der PS-Domäne über eine der folgenden Arten auswählt:
Bestimmen eines MSC oder eines SGSN, das bzw. der den Empfänger bedient, als Routinginstanz gemäß in einem HSS oder einem HLR aufgezeichneten Informationen des MSC oder des SGSN, das bzw. der den Empfänger bedient.

4. Verfahren gemäß einem der Ansprüche 1 bis 3, wobei das Verfahren, nachdem das "Nachrichtendienst-Interworkingmodul" die Kurznachricht an den Empfänger gesendet hat, weiter Folgendes umfasst:
Empfangen einer Übermittlungserfolgsnachricht durch das "Nachrichtendienst-Interworkingmodul"; und
Verarbeiten der Übermittlungserfolgsnachricht durch das "Nachrichtendienst-Interworkingmodul".

5. Verfahren gemäß Anspruch 4, wobei das "Nachrichtendienst-Interworkingmodul" die Übermittlungserfolgsnachricht auf eine der folgenden Arten verarbeitet:
Verwerfen der Übermittlungserfolgsnachricht durch das "Nachrichtendienst-Interworkingmodul" ohne irgendeine Verarbeitung;
Senden einer Erfolgsantwort der IM durch das "Nachrichtendienst-Interworkingmodul" an den Sender;
Senden einer nicht mit der IM assoziierten Übermittlungserfolgsnachricht durch das "Nachrichtendienst-Interworkingmodul" an den Sender; und
Senden einer mit der IM assoziierten Übermittlungserfolgsnachricht durch das "Nachrichtendienst-Interworkingmodul" an den Sender.

6. Verfahren gemäß Anspruch 5, wobei das "Nachrichtendienst-Interworkingmodul" die Art der Verarbeitung der Übermittlungserfolgsnachricht auf mindestens eine der folgenden Arten auswählt:
Auswählen gemäß der Richtlinie des Betreibers;
Auswählen gemäß einem Format der empfangenen IM;
Auswählen gemäß bevorzugten Informationen des Empfängers; und
Auswählen danach, ob die IM Nachrichtenstatusanforderungsinformationen führt.

7. Verfahren gemäß einem der Ansprüche 1 bis 3, wobei das Verfahren, nachdem das "Nachrichtendienst-Interworkingmodul" die Kurznachricht an den Empfänger gesendet hat, weiter Folgendes umfasst:
Empfangen einer Übermittlungsfehlernachricht durch das "Nachrichtendienst-Interworkingmodul"; und
Auswählen einer Fehlerverarbeitungsart durch das "Nachrichtendienst-Interworkingmodul".

8. Verfahren gemäß Anspruch 7, wobei das "Nachrichtendienst-Interworkingmodul" die Fehlerverarbeitungsart auswählt Folgendes umfasst:
Verwerfen der Übermittlungsfehlernachricht durch das "Nachrichtendienst-Interworkingmodul" ohne irgendeine Verarbeitung; oder
Senden einer Fehlerantwort der IM durch das "Nachrichtendienst-Interworkingmodul" an den Sender; oder
Senden einer mit der IM assoziierten Übermittlungsfehlernachricht durch das "Nachrichtendienst-Interworkingmodul" an den Sender; oder
Warten durch das "Nachrichtendienst-Interworkingmodul", bis ein Status des Empfängers zurückerlangt ist, und Neuübermitteln von Nachrichtendienstinformationen.

9. Verfahren gemäß Anspruch 8, wobei die Fehlerverarbeitungsart auf mindestens eine der folgenden Arten ausgewählt wird:
Auswählen gemäß der Richtlinie des Betreibers;
Auswählen gemäß bevorzugten Informationen des Empfängers;
Auswählen gemäß einem Registrierungsstatus des Empfängers;
Auswählen gemäß einem Format der empfangenen IM;
Auswählen danach, ob die IM Nachrichtenstatusanforderungsinformationen führt; und
Auswählen danach, ob ein Nachrichtendienstneusendemodul Statusinformationen des Empfängers abonniert.

10. "Nachrichtendienst-Interworkingmodul", **gekennzeichnet durch**:
ein Transceivermodul (811), das konfiguriert ist, eine **durch** einen Sender gesendete Sofortnachricht IM zu empfangen, die IM an ein Nachrichtenumwandlungsmodul (814) und ein Routingnetzauswahlmodul (812) zu senden und eine **durch** das Nachrichtenumwandlungsmodul (814) umgewandelte Kurznachricht an eine ausgewählte Routinginstanz zu senden;
das Routingnetzauswahlmodul (812), das konfiguriert ist, eine Domänenauswahl an der empfangenen IM durchzuführen und eine leitungsvermittelte Domäne CS-Domäne oder eine paketvermittelte Domäne PS-Domäne als Routingnetz auszuwählen;
ein Routinginstanzauswahlmodul (813), das konfiguriert ist, die Routinginstanz in der CS-Domäne oder der PS-Domäne auszuwählen und Informationen der ausgewählten Routinginstanz an das Transceivermodul (811) zu senden;
und
das Nachrichtenumwandlungsmodul (814), das konfiguriert ist, die empfangene IM in die Kurznachricht umzuwandeln und die Kurznachricht an das Transceivermodul (811) zu senden;
wobei, wenn ein "Mobile Switching Center" MSC oder ein "Serving GPRS Support Node" SGSN, das bzw. der den Empfänger bedient, als Routinginstanz verwendet wird, das Transceivermodul (811), das konfiguriert ist, die **durch** das Nachrichtenumwandlungsmodul (814) umgewandelte Kurznachricht an die ausgewählte Routinginstanz zu senden, Folgendes umfasst:
das Transceivermodul (811), das konfiguriert ist, eine "Kurznachrichtendienst(SMS)-Deliver-Nachricht" an das MSC oder den SGSN, das bzw. der den Empfänger bedient, zu senden, wobei in der "SMS-Deliver-Nachricht" Senderinformationen Informationen des Senders der IM sind, Empfängerinformationen Informationen des Empfängers der IM sind und Empfänger-SMS-Dienstzentrum(SMS-SC)-Informationen eine Adresse des "Nachrichtendienst-Interworkingmoduls" sind.

11. System zur Implementierung eines "Nachrichtendienst-Interworkings", das Folgendes umfasst: ein "Nachrichtendienst-Interworkingmodul" (810) gemäß Anspruch 10 und eine Routinginstanz (820) in einer leitungsvermittelten Domäne CS-Domäne oder einer paketvermittelten Domäne PS-Domäne, die konfiguriert sind, eine Kurznachricht zu empfangen und an den Empfänger zu senden.

## Revendications

1. Procédé de mise en oeuvre d'une interopérabilité de service de messagerie, **caractérisé par** :
la réception, grâce à un module d'interopérabilité de service de messagerie desservant un destinataire, d'un message instantané IM envoyé par un émetteur (1),
la sélection, par le module d'interopérabilité de service de messagerie desservant le récepteur, de l'un d'un domaine à commutation de circuits CS et d'un domaine de commutation de paquets PS en temps que réseau de routage (2), et
la conversion, par le module d'interopérabilité de service de messagerie desservant le récepteur, du message IM en un message court et l'envoi du message court au destinataire par l'intermédiaire d'une entité de routage dans l'un du domaine CS et du domaine PS (3),
dans lequel lorsque l'un d'un central mobile MSC et d'un noeud de prise en charge de desserte GPRS, SGSN, desservant le destinataire est utilisé comme entité de routage,
l'envoi du message court au destinataire par l'intermédiaire de l'entité de routage dans l'un du domaine CS et du domaine PS comprend :
l'envoi, par le module d'interopérabilité de service de messagerie, d'un message remis du service de messagerie courte SMS à l'un du central mobile MSC et du noeud SGSN desservant le destinataire, où les informations de l'émetteur, dans le message SMS remis, représentent des informations concernant l'émetteur du message IM, les informations du destinataire représentent les informations concernant le destinataire du message IM et les informations du centre de service de messagerie SMS, SMS-SC, du destinataire représentent une adresse du module d'interopérabilité de service de messagerie (s108).

2. Procédé selon la revendication 1, comprenant en outre :
l'interaction, par le module d'interopérabilité de service de messagerie desservant le destinataire avec l'un d'un serveur d'abonnés domestiques HSS et d'un registre d'emplacements domestiques HLR afin d'acquérir des informations d'état d'enregistrement du destinataire et de sélectionner l'un du domaine CS et du domaine PS comme réseau de routage en fonction des informations d'état d'enregistrement du destinataire après avoir reçu le message IM envoyé par l'émetteur.

3. Procédé selon la revendication 1, dans lequel le module d'interopérabilité de service de messagerie sélectionne l'entité de routage dans l'un du domaine CS et du domaine PS de l'une des manières suivantes :
la détermination de l'un d'un central mobile MSC et d'un noeud SGSN desservant le destinataire comme entité de routage conforme aux informations de l'un du central mobile MSC et du noeud SGSN desservant le destinataire enregistré dans l'un d'un serveur HSS et d'un registre HLR.

4. Procédé selon l'une quelconque des revendications 1 à 3, dans lequel, après que le module d'interopérabilité de service de messagerie a envoyé le message court au destinataire, le procédé comprend de plus :
la réception, par le module d'interopérabilité de service de messagerie, du message de réussite de délivrance, et
le traitement, par le module d'interopérabilité de service de messagerie, du message de réussite de délivrance.

5. Procédé selon la revendication 4, dans lequel le module d'interopérabilité de service de messagerie traite le message de réussite de délivrance de l'une des manières suivantes :
le rejet, par le module d'interopérabilité de service de messagerie, du message de réussite de délivrance sans aucun traitement,
l'envoi, par le module d'interopérabilité de service de messagerie, d'une réponse de réussite du message IM à l'émetteur,
l'envoi, par le module d'interopérabilité de service de messagerie, d'un message de réussite de délivrance non associé au message IM vers le destinataire, et
l'envoi, par le module d'interopérabilité de service de messagerie, d'un message de réussite de délivrance associé au message IM vers le destinataire.

6. Procédé selon la revendication 5, dans lequel le module d'interopérabilité de service de messagerie sélectionne la matière de traitement du message de réussite de délivrance selon au moins l'une des manières suivantes :
une sélection en fonction de la politique de l'opérateur,
une sélection en fonction du format du message IM reçu,
une sélection en fonction d'informations préférées du destinataire, et
une sélection en fonction du fait que le message IM transporte des informations de demande d'état du message.

7. Procédé selon l'une quelconque des revendications 1 à 3, dans lequel après que le module d'interopérabilité de service de messagerie a envoyé le message court au destinataire, le procédé comprend de plus :
la réception, par le module d'interopérabilité de service de messagerie, d'un message d'échec de délivrance, et
la sélection, par le module d'interopérabilité de service de messagerie, d'un procédé de traitement de défaillance.

8. Procédé selon la revendication 7, dans lequel le module d'interopérabilité de service de messagerie sélectionne le procédé de traitement de défaillance comprend l'une des actions suivantes :
le rejet, par le module d'interopérabilité de service de messagerie, du message de défaillance de délivrance sans aucun traitement,
l'envoi, par le module d'interopérabilité de service de messagerie, d'une réponse sur la défaillance du message IM à l'émetteur,
l'envoi, par le module d'interopérabilité de service de messagerie, d'un message de défaillance de délivrance associé au message IM à l'émetteur, et
la mise en attente, par le module d'interopérabilité de service de messagerie, jusqu'à ce que l'état du récepteur soit récupéré puis à nouveau la délivrance d'informations de service de messagerie.

9. Procédé selon la revendication 8, dans lequel le procédé de traitement de défaillance est sélectionné selon au moins l'une des manières suivantes :
une sélection en fonction de la politique de l'opérateur,
une sélection en fonction d'informations préférées du destinataire,
une sélection en fonction d'un état d'enregistrement du destinataire,
une sélection en fonction du format du message IM reçu,
une sélection en fonction du fait que le message IM transporte des informations de demande d'état de messages, et
une sélection en fonction du fait qu'un module de réédition de service de messagerie souscrit à des informations d'état sur le destinataire.

10. Module d'interopérabilité de service de messagerie **caractérisé par** :
un module émetteur récepteur (811) configuré pour recevoir un message instantané IM envoyé par un émetteur, pour envoyer le message IM à un module de conversion de message (814) et à un module de sélection de réseau de routage (812), et pour envoyer un message court converti par le module de conversion de message (814) à une entité de routage sélectionnée,
le module de sélection de réseau de routage (812), configuré pour effectuer la sélection de domaine sur le message IM reçu et pour sélectionner l'un d'un domaine à commutation de circuits CS et d'un domaine à commutation de paquets PS en tant que réseau de routage,
un module de sélection d'entité de routage (813) configuré pour sélectionner l'entité de routage dans l'un du domaine CS et du domaine PS et pour envoyer des informations concernant l'entité de routage sélectionnée au module émetteur récepteur (811),
et
le module de conversion de message (1014), configuré pour convertir le message IM reçu en message court et pour envoyer le message court au module émetteur récepteur (811),
dans lequel, lorsque l'un d'un central mobile MSC et d'un noeud de prise en charge de desserte GPRS, SGSN, desservant le destinataire est utilisé comme entité de routage,
le module émetteur récepteur (111), configuré pour envoyer le message court converti par le module de conversion de message (814) à l'entité de routage sélectionnée, comprend :
le module émetteur récepteur (811) configuré pour envoyer un message remis de service de messagerie courte SMS à l'un du central mobile MSC et du noeud SGSN desservant le destinataire, dans lequel, dans le message SMS remis, des informations de l'émetteur représentent des informations concernant l'émetteur du message IM, les informations du destinataire représentent des informations concernant le destinataire du message IM et les informations du centre de service de messagerie SMS, SMS-SC, du destinataire représentent une adresse du module d'interopérabilité de service de messagerie.

11. Système destiné à la mise en oeuvre d'une interopérabilité de service de messagerie comprenant un module d'interopérabilité de service de messagerie (810) conforme à la revendication 10 ainsi qu'une entité de routage (820) dans l'un d'un domaine à commutation de circuits CS et d'un domaine à commutation de paquets PS configuré pour recevoir et envoyer un message court au destinataire.
